Europäisches Patentamt

European Patent Office

Office européen des brevets

(11) Publication number: **0 132 239**
**B1**

(12) **EUROPEAN PATENT SPECIFICATION**

(45) Date of publication of patent specification: **07.12.88**

(21) Application number: **84850131.8**

(22) Date of filing: **26.04.84**

(51) Int. Cl.⁴: **B 01 D 53/04,** C 01 B 13/02, C 01 B 23/00

(54) **Gas separation process.**

(30) Priority: **05.05.83 SE 8302589**

(43) Date of publication of application:
**23.01.85 Bulletin 85/04**

(45) Publication of the grant of the patent:
**07.12.88 Bulletin 88/49**

(84) Designated Contracting States:
**AT DE FR GB NL**

(56) References cited:
**DE-A-1 444 435**
**DE-A-2 626 065**
**DE-A-2 826 913**

(73) Proprietor: **AGA AKTIEBOLAG**
**S-18181 Lidingö (SE)**

(72) Inventor: **Boniface, Hugh**
**105 Glendale Road P.O. Box 1296**
**Deep River Ontario (CA)**
Inventor: **Eriksson, Ronny**
**Skogsliden 35**
**S-18341 Täby (SE)**
Inventor: **von Krusenstierna, Otto**
**Östermalmsgatan 95**
**S-11459 Stockholm (SE)**
Inventor: **Ruthven, Douglas**
**428 Forest Hill Road**
**Fredericton, N.B. (CA)**
Inventor: **Wester, Margareta**
**Rösvägen 12**
**S-18346 Täby (SE)**

(74) Representative: **Wiedemann, Bernd**
**AGA AKTIEBOLAG Patent Department**
**S-181 81 Lidingö (SE)**

Courier Press, Leamington Spa, England.

## Description

The present invention relates to a pressure swing adsorption process for separation of oxygen and argon from a raw gas containing a mixture thereof. The process comprises an adsorption step in which the raw gas is supplied to an adsorption bed in which a greater proportion is adsorbed of one gas than of the other, whereby a gas flow enriched of said other gas is provided, and a desorption step in which a gas flow is provided which is enriched of said one gas adsorbed in said adsorption step.

It is previously known within this field to separate oxygen and argon by adsorption in a zeolite at low temperature; see e.g. DE 24 57 842.

A separation process is also known in which the different rates of adsorption in zeolite of oxygen and argon is utilized, see US 3 242 645.

Both the above-mentioned, known processes suffer from certain draw-backs and disadvantages. The first mentioned process requires a cooling medium by which a temperature of about −150°C can be provided. The second process requires accurate control of pressure and low velocity to prevent adsorption equilibrium of the two gases, and in addition, the efficiency is so low that the process is not practicable on a commercial basis.

For the reasons stated above it is an object of the invention to provide a separation process which makes it possible to separate oxygen and argon in a zeolite bed at room temperature and to avoid the above-mentioned disadvantages of known processes.

Pressure swing adsorption processes have been known for a long time for separation of oxygen and nitrogen by means of a zeolite adsobent bed, the adsorption taking place on an equilibrium basis. Such processes are now carried out industrially. However, the separation of oxygen and argon by such a process has not been performed successfully. Since the adsorption properties of oxygen and argon are similar in this respect it has neither been deemed possible to obtain a separation of these gas by adsorption in zeolite. Thus, it is set forth in e.g. US patent 4 190 424 that flowing through a zeolite bed has no significant influence on the proportions of oxygen and argon of a gas mixture.

By the process according to the present invention it has appeared possible, in spite of what has been set forth above, to obtain an effective separation of oxygen and argon by adsorption in a zeolite bed at room temperature. This has been obtained by a process of the kind mentioned in the introduction which according to the invention is characterized in that the adsorbent material of the adsorption bed comprises a zeolite of the clinoptilolite type.

The raw gas used in the process consists of a dry gas mixture enriched of oxygen and argon and obtained e.g. by a conventional air separation step of a pressure swing adsorption process. According to the invention, a number of steps are utilized, preferably as set forth below, said steps being known per se in connection with pressure swing adsorption.

For the production of argon, oxygen is adsorbed in the bed in a first step which may take place at an increasing or constant pressure. The pressure increase is obtained partly by raw gas and partly by product gas, or merely by raw gas. During the latter part of this step argon is produced which passes through and out of the bed. However, production can also take place at a decreasing pressure, provided that the whole bed is not saturated with oxygen. In such case, the oxygen desorbed in the first portion of the bed will be re-adsorbed in the following portion thereof.

In a second step the bed is regenerated, the pressure being reduced and oxygen being desorbed. The bed may also be flushed with product gas.

The pressure swing takes place between a high pressure which may be overpressure or atmospheric pressure, and a low pressure which may be atmospheric or sub-atmospheric, perferably sub-atmospheric.

When the process is used for the production of oxygen having a purity above 95%, oxygen is adsorbed in a first step at increasing or constant pressure. After that a product gas flushing is carried out at a maintained high pressure. The argon enriched residual gas formed during the adsorption and flushing steps is discharged from the bed. During the subsequent pressure reduction oxygen is desorbed which is collected as product gas. Even in this case the high pressure is overpressure or atmospheric pressure, and the low pressure is atmospheric or sub-atmospheric. When preferred, part of the residual gas may be recirculated to the adsorption step, and thus, the pressure increase may be carried out by feeding either merely raw gas or raw gas and recirculated residual gas.

In another modification of the invention a raw gas comprising essential adsorbed oxygen is supplied to the bed at atmospheric pressure. This results in adsorption of argon which pushes out oxygen at the same time as the oxygen of the raw gas passes through the bed and can be withdrawn as product gas. The pressure is then increased by means of product gas and the bed is flushed at high pressure whereby the adsorbed argon is flushed out. Finally, the pressure is reduced to atmospheric pressure in a desorption step in which the desorbed oxygen gas is withdrawn as product.

In the above described modifications two to four adsorption beds are used, preferably two, operating out of phase with each other. As is known in the art, the required compression energy can thereby be reduced by pressure equalization between the beds and a more even production is obtained.

A probable explanation to the fact that it has appeared possible to separate oxygen and argon by means of clinoptilolite in spite of the fact that other types of zeolite cannot be used may be that clinoptilolite has two different pore systems. The pore openings are elliptical in both cases, but the dimensions are mutually different. Thus, in one pore system the largest and smallest dimension is 7.9 and 3.5 angstrom, respectively, and in the other 4.4 and 3.0 angstrom, respectively. In spite of the fact that argon and oxygen molecules are approximately the same size, since oxygen molecules have two atoms, they have the possibility of orienting themselves such as to be able to enter even the small pores, while argon molecules are excluded therefrom due to their size. As a result, oxygen is adsorbed to a larger extent than argon.

**Claim**

A pressure swing adsorption process for separating oxygen and argon from a raw gas containing a mixture thereof, comprising

a) an adsorption step in which the raw gas is supplied to an adsorption bed in which a greater proportion of one gas than of the other is adsorbed, whereby a gas glow enriched of said other gas is produced,

b) a desorption step in which a gas flow is provided which is enriched of said one gas adsorbed in said adsorption step,

characterized in that the adsorbent material of the adsorption bed comprises a zeolite of the clinoptilolite type.

**Patentanspruch**

Verfahren zum Abtrennen von Sauerstoff und Argon aus Rohgas, das eine Mischung derselben enthalt, durch Druckschwankungsadsorption, umfassend

a) einen Adsorptionsschritt, bei welchem das Rohgas einem Adsorptionsbett zugeführt, in welchem ein größerer Anteil des einen Gases adsorbiert wird als des anderen Gases, wodurch ein Gasstrom erzeugt wird, der an dem anderen Gas angereichert ist,

b) einen Desorptionsschritt, bei welchem ein Gasstrom erzeugt wird, der an dem geannten einen Gas, das im genannten Adsorptionsschritt adsorbiert wurde, angereichert ist,

dadurch gekennzeichnet, daß das Adsorptionsmaterial des Adsorptionsbettes ein Zeolith des Clinoptilolite-Typs ist.

**Revendication**

Un procédé d'adsorption à pression fluctuable pour la séparation de l'oxygène et de l'argon à partir d'un gas brut contenant un mélange de ceux-ci, comprenant:

a) une étape d'adsorption dans laquelle le gaz brut alimente un lit d'adsorption dans lequel une plus grande proportion de l'un des gaz que l'autre est adsorbée, de façon qu'un flux de gaz enrichi de l'autre gaz est produit,

b) une étape de désorption dans laquelle un flux de gaz, qui est enrichi dudit un gaz adsorbé dans ladite étape adsorption, est fourni,

caractérisé en ce que le matérial adsorbant du lit d'adsorption comprend un zéolite du type clinoptilolite.